# EUROPÄISCHE PATENTSCHRIFT

(11) **EP 2 849 626 B1**
(45) Veröffentlichungstag und Bekanntmachung des Hinweises auf die Patenterteilung: **27.12.2017**
(21) Anmeldenummer: 13720970.6
(22) Anmeldetag: 08.05.2013
(51) Int. Cl.: A47L 15/42, D06F 39/08, F16L 3/04, F16L 5/00

(54) **HAUSHALTSGERÄT MIT AUSSEN LIEGENDER SCHLAUCHHOCHFÜHRUNG**
DOMESTIC APPLIANCE HAVING AN EXTERNAL UPWARD EXTENDING PIPE
APPAREIL MÉNAGER À ÉLÉMENT DE GUIDAGE VERS LE HAUT DU TUYAU, SE TROUVANT À L'EXTÉRIEUR DE L'APPAREIL

(30) Priorität: 16.05.2012 DE 102012208296
(43) Veröffentlichungstag der Anmeldung: 25.03.2015
(73) Patentinhaber: BSH Hausgeräte GmbH, 81739 München (DE)
(72) Erfinder: BÜSING, Johannes, 86494 Emersacker (DE); JERG, Helmut, 89537 Giengen (DE); ROSENBAUER, Michael Georg, 86756 Reimlingen (DE)
(86) Internationale Anmeldenummer: PCT/EP2013/059649
(87) Internationale Veröffentlichungsnummer: WO 2013/171120

(56) Entgegenhaltungen:
- DE-A1- 19 629 884
- DE-A1- 19 914 370
- DE-U- 1 769 013
- JP-A- 2003 210 378
- JP-A- 2004 305 730
- US-A- 4 870 988

## Beschreibung

Die Erfindung betrifft ein wasserführendes Haushaltsgerät mit einer an einer Außenwand angeordneten Haltevorrichtung gemäß Patentanspruch 1.

Wasserführende Haushaltsgeräte, beispielsweise Geschirrspülmaschinen, weisen Ablaufschläuche auf, die dazu dienen, Abwasser aus dem Haushaltsgerät abzuführen. Um ein unbeabsichtigtes und vorzeitiges Ablaufen des Wassers aus dem Haushaltsgerät zu verhindern, ist es bekannt, im Haushaltsgerät eine Schlauchhochführung vorzusehen. Hierbei wird der Ablaufschlauch über eine Position geführt, die höher als ein maximal auftretender Flüssigkeitsspiegel des Wassers im Haushaltsgerät liegt. Die DE 10 2008 020 884 A1 beschreibt eine Schlauchhochführung, bei der der Ablaufschlauch mittels Halteklammern definiert innerhalb der Geschirrspülmaschine geführt wird.

Aus der JP 2003210378 A ist eine Geschirrspülmaschine bekannt, bei der ein Schlauch in einer Aussparung in der Rückwand der Geschirrspülmaschine angeordnet ist.

Aus der JP 2004305730 A ist eine Geschirrspülmaschine bekannt, welche zwischen dem Spülbehälter und einer Rückwand einen Aufnahmeraum für einen Wasserversorgungsschlauch aufweist. Dabei ist in dem Aufnahmeraum eine Knickschutzvorrichtung vorgesehen, mit deren Hilfe sich der Biegedurchmesser des Wasserversorgungsschlauches regulieren lässt.
Die Aufgabe der vorliegenden Erfindung besteht darin, ein wasserführendes Haushaltsgerät bereitzustellen, bei dem ein Verlauf eines Ablaufschlauchs verbessert ist. Diese Aufgabe wird durch ein wasserführendes Haushaltsgerät mit den Merkmalen des Anspruchs 1 gelöst. Bevorzugte Weiterbildungen sind in den abhängigen Ansprüchen angegeben.

Ein erfindungsgemäßes wasserführendes Haushaltsgerät, insbesondere eine Haushalts-Geschirrspülmaschine, weist eine an einer Außenwand angeordnete erste Haltevorrichtung auf, die dazu vorgesehen ist, während eines Betriebs des Haushaltsgeräts einen Schlauch an der Außenwand zu halten. Vorteilhafterweise kann dann der Schlauch selbst zur Realisierung einer Hochführung genutzt werden. Dadurch wird die Notwendigkeit von Dichtstellen zwischen dem Schlauch und einer Hochführung vermieden. Hierdurch vereinfacht sich in vorteilhafter Weise auch die Montage des wasserführenden Haushaltsgeräts.

In einer bevorzugten Ausführungsform des Haushaltsgeräts ist der Schlauch durch einen Durchbruch der Außenwand des Haushaltsgeräts geführt. Dabei ist die erste Haltevorrichtung oberhalb des Durchbruchs angeordnet. Vorteilhafterweise ergibt sich dann eine Schlauchhochführung, wenn der durch den Durchbruch geführte Schlauch durch die Haltevorrichtung an der Außenwand gehalten wird.

In einer Ausführungsform des Haushaltsgeräts ist der Schlauch ein Ablaufschlauch. Vorteilhafterweise ist das Vorsehen einer Schlauchhochführung bei einem Ablaufschlauch eines wasserführenden Haushaltsgeräts besonders sinnvoll. Ein besonderer Vorteil der an der Außenwand angeordneten Haltevorrichtung für den Schlauch besteht darin, dass der Schlauch, beispielsweise während eines Transports, aus der Haltevorrichtung entnommen werden kann. Auch falls ein Siphon an einem Abwasseranschluss in einem Haushalt ausreichend hoch angeordnet ist, um auf eine Hochführung des Ablaufschlauchs zu verzichten, kann der Ablaufschlauch aus der ersten Haltevorrichtung entnommen werden. Dann erhöht sich vorteilhafterweise die nutzbare Länge des Ablaufschlauchs, was es ermöglicht, das wasserführende Haushaltsgerät in größerer Entfernung von dem Abwasseranschluss zu platzieren.

In einer bevorzugten Ausführungsform des Haushaltsgeräts ist die Außenwand eine rückwärtige Außenwand des Haushaltsgeräts. Vorteilhafterweise ist der Schlauch dann bei einer üblichen Platzierung des wasserführenden Haushaltsgeräts einer Sichtbarkeit entzogen. Durch die verborgene und dadurch geschützte Anordnung des Schlauchs wird außerdem die Gefahr reduziert, dass der Schlauch versehentlich beschädigt wird.

Es ist zweckmäßig und erfindungsgemäß vorgesehen, dass die erste Haltevorrichtung so ausgebildet und angeordnet ist, dass sie einen u-förmig verlaufenden Abschnitt des Schlauchs halten kann. Vorteilhafterweise kann eine Schlauchhochführung des Schlauchs dann in Form eines u-förmigen Abschnitts des Schlauchs realisiert werden.

In einer bevorzugten Ausführungsform des Haushaltsgeräts umfasst die erste Haltevorrichtung eine Schlauchklammer zum Einklemmen des Schlauchs. Vorteilhafterweise ist der Schlauch dann besonders einfach und ohne zusätzliches Werkzeug an der ersten Haltevorrichtung montierbar.
Besonders bevorzugt umfasst die erste Haltevorrichtung zwei Schlauchklammern. Vorteilhafterweise wird der Schlauch dann zuverlässig durch die Haltevorrichtung gehalten.
In einer bevorzugten Weiterbildung des Haushaltsgeräts ist die erste Haltevorrichtung einstückig mit einer Spülwanne des Haushaltsgeräts ausgebildet. Vorteilhafterweise ist das Haushaltsgerät dann besonders kostengünstig herstellbar.
In einer ebenfalls bevorzugten Ausführungsform des Haushaltsgeräts ist die erste Haltevorrichtung einstückig mit einem Basisträger des Haushaltsgeräts ausgebildet. Vorteilhafterweise kann das Haushaltsgerät dann besonders kostengünstig hergestellt werden. Der Basisträger kann dabei auch einstückig mit einer Spülwanne des Haushaltsgeräts ausgebildet sein. Erfindungsgemäß ist die erste Haltevorrichtung im Bereich einer ersten Einbuchtung der Außenwand angeordnet, wobei die Außenwand im Bereich der ersten Einbuchtung in Richtung eines Innenraums des Haushaltsgeräts eingebuchtet ist. Vorteilhafterweise werden die Außenmaße des Haushaltsgeräts dann nicht durch die erste Haltevorrichtung erhöht. Ein weiterer Vorteil besteht darin, dass die Schlauchhochführung des Schlauchs in der Einbuchtung angeordnet werden kann, wodurch die Schlauchhochführung zumindest teilweise gegen äußere Einflüsse und Beschädigungen geschützt ist.
Erfindungsgemäß weist das Haushaltsgerät eine zweite Haltevorrichtung auf, die dazu vorgesehen ist, während eines Betriebs des Haushaltsgeräts den Schlauch an der Außenwand zu halten. Vorteilhafterweise kann der Schlauch dann entweder in der ersten Haltevorrichtung oder in der zweiten Haltevorrichtung gehalten werden. Dadurch erhöht sich vorteilhafterweise die Flexibilität des Haushaltsgeräts, wodurch sich größere Freiheiten der Wahl eines Aufstellorts des Haushaltsgeräts ergeben. So kann das Haushaltsgerät vorteilhafterweise insbesondere zu beiden Seiten eines Abwasseranschlusses aufgestellt werden. Erfindungsgemäß ist die zweite Haltevorrichtung im Bereich einer zweiten Einbuchtung der Außenwand angeordnet, wobei die Außenwand im Bereich der zweiten Einbuchtung in Richtung eines Innenraums des Haushaltsgeräts eingebuchtet ist. Vorteilhafterweise ist eine in der zweiten Haltevorrichtung gehaltene Schlauchhochführung des Schlauchs dann in der zweiten Einbuchtung zumindest teilweise geschützt angeordnet, wodurch die Gefahr eines versehentlichen Abreißens oder Beschädigens der Schlauchhochführung reduziert wird. Außerdem vergrößern die in der zweiten Einbuchtung angeordnete zweite Haltevorrichtung und die in der zweiten Einbuchtung angeordnete Schlauchhochführung die Außenkontur des Haushaltsgeräts vorteilhafterweise nicht.

In einer besonders bevorzugten Ausführungsform des Haushaltsgeräts ist die zweite Haltevorrichtung symmetrisch zur ersten Haltevorrichtung ausgebildet und angeordnet. Vorteilhafterweise ist das Haushaltsgerät dann besonders flexibel einsetzbar und bietet große Freiheiten bei der Wahl des Aufstellorts des Haushaltsgeräts.

Weitere Merkmale und Vorteile der Erfindung werden nachfolgend anhand von Ausführungsbeispielen mit Bezugnahme auf die beigefügten Figuren erläutert. Es zeigen, jeweils in einer schematischen Prinzipskizze:
Figur 1 einen Teil einer rückwärtigen Ansicht einer Geschirrspülmaschine;
Figur 2 einen vergrößerten Ausschnitt der rückwärtigen Ansicht der Geschirrspülmaschine;
Figur 3 eine geschnittene Darstellung eines Innenraums der Geschirrspülmaschine;
Figur 4 eine Aufsicht auf einen Teil des Innenraums der Geschirrspülmaschine;
Figur 5 eine vergrößerte Schnittdarstellung eines Teils des Innenraums der Geschirrspülmaschine;
Figur 6 eine vergrößerte und geschnittene Darstellung eines rückwärtigen Teils der Geschirrspülmaschine;
Figur 7 eine rückwärtige Ansicht der Geschirrspülmaschine mit montiertem Ablaufschlauch; und
Figur 8 eine vergrößerte Darstellung eines Teils der rückwärtigen Ansicht der Geschirrspülmaschine mit montiertem Ablaufschlauch.

In den Figuren werden gleiche oder gleichwirkende Elemente oder Teile mit denselben Bezugszeichen versehen. Dabei sind nur diejenigen Bestandteile des Haushaltsgeräts mit Bezugszeichen versehen und erläutert, welche für das Verständnis der vorliegenden Erfindung von Bedeutung sind. Selbstverständlich kann ein erfindungsgemäßes Haushaltsgerät auch weitere Teile oder Baugruppen umfassen.

Die Erfindung wird nachfolgend anhand einer Geschirrspülmaschine 100 erläutert. Die Geschirrspülmaschine 100 dient zum Reinigen von Geschirr. Die Erfindung kann jedoch auch bei anderen wasserführenden Haushaltsgeräten verwendet werden. Beispielsweise kann die Erfindung auch bei Haushalts-Waschmaschinen eingesetzt werden.

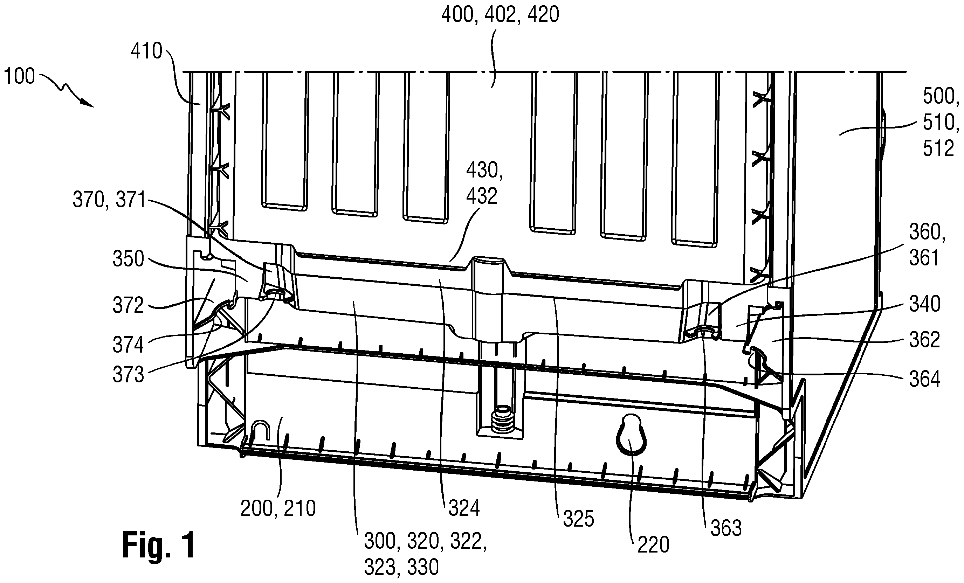

Figur 1 zeigt einen Teil einer rückwärtigen Ansicht der Geschirrspülmaschine 100 in einer perspektivischen Schrägdarstellung. Gezeigt sind eine rückseitige Wand 210 eines Basisträgers 200 der Geschirrspülmaschine 100, eine Außenseite 402 einer Rückwand 400 der Geschirrspülmaschine 100 und eine Außenseite 512 einer ersten Seitenwand 510 einer Behälterwandung 500 der Geschirrspülmaschine 100. Der Basisträger 200 bildet einen Boden- und Sockelbereich der Geschirrspülmaschine 100. Die Rückwand 400 bildet eine Rückseite der Geschirrspülmaschine 400 und umfasst einen auf dem Basisträger 200 angeordneten Rahmen 410, der zur Halterung der Behälterwandung 500 dient. Die Behälterwandung 500 weist eine U-Form auf und bildet neben der ersten Seitenwand 510 auch eine der ersten Seitenwand 510 gegenüberliegende zweite Seitenwand und eine Deckenwandung der Geschirrspülmaschine 100. Der Basisträger 200 besteht bevorzugt aus Kunststoff. Die Rückwand 400 besteht bevorzugt ebenfalls aus Kunststoff, kann jedoch auch aus einem Metall bestehen. Die Behälterwandung 500 besteht aus einem Metall oder aus einem Kunststoff.

Der Basisträger 200 der Geschirrspülmaschine 100 umfasst eine Spülwanne 300, von der in Figur 1 lediglich eine Außenseite 322 eines Rückenabschnitts 320 sichtbar ist. Bei der Geschirrspülmaschine 100 sind der Basisträger 200 und die Spülwanne 300 also einstückig ausgebildet. Dies ist allerdings nicht zwingend erforderlich. In anderen Ausführungsformen der Erfindung können der Basisträger 200 und die Spülwanne 300 auch getrennt ausgebildet sein.

Der Rückenabschnitt 320 des die Spülwanne 300 bildenden Teils des Basisträgers 200 weist über die Breite der rückseitigen Wand 210 des Basisträgers 200, also im Bereich zwischen der ersten Seitenwand 510 der Geschirrspülmaschine 100 und der der ersten Seitenwand 510 gegenüberliegenden zweiten Seitenwand der Geschirrspülmaschine 100, nebeneinander eine erste Einbuchtung 340, einen mittleren Bereich 330 und eine zweite Einbuchtung 350 auf. Die erste Einbuchtung 340 ist dabei der ersten Seitenwand 510 der Geschirrspülmaschine 100 benachbart. Die zweite Einbuchtung 350 ist der zweiten Seitenwand der Geschirrspülmaschine 100 benachbart. Der mittlere Bereich 330 ist zwischen der ersten Einbuchtung 340 und der zweiten Einbuchtung 350 angeordnet.

Im Bereich der ersten Einbuchtung 340 und der zweiten Einbuchtung 350 ist der Rückenabschnitt 320 der Spülwanne 300 gegenüber dem mittleren Bereich 330 weiter in Richtung eines Innenraums der Geschirrspülmaschine 100 versetzt. In der Aufsicht auf die rückseitige Wand 210 ragt der mittlere Bereich 330 somit weiter nach außen, als die erste Einbuchtung 340 und die zweite Einbuchtung 350. Zwischen den Einbuchtungen 340, 350 und dem mittleren Bereich 330 sind entsprechende Übergangsbereiche ausgebildet.

Der Rückenabschnitt 320 des die Spülwanne 300 bildenden Teils des Basisträgers 200 ist in einen untere Abschnitt 322 und einen oberen Abschnitt 324 unterteilt. Der untere Abschnitt 323 ist in senkrechte Richtung der Geschirrspülmaschine 100 unterhalb des oberen Abschnitts 324 angeordnet. Der obere Abschnitt 324 ist also näher an einer Deckenwandung der Geschirrspülmaschine 100 angeordnet als der untere Abschnitt 323. Zwischen dem unteren Abschnitt 323 und dem oberen Abschnitt 324 ist ein kleiner Absatz 325 ausgebildet. Dieser Absatz 325 wird dadurch gebildet, dass der obere Abschnitt 324 etwas weiter außen angeordnet ist als der untere Abschnitt 323. Der untere Abschnitt 323 ist also näher an einem Innenraum der Geschirrspülmaschine 100 angeordnet.

In der rückseitigen Wand 210 des unteren Teils des Basisträgers 200, also des unterhalb der Spülwanne 300 angeordneten Teils des Basisträgers 200, ist ein Durchbruch 220 ausgebildet. Der Durchbruch 220 ist somit unterhalb der Spülwanne 300 und somit auch unterhalb der Einbuchtungen 340, 350 angeordnet.

Im Bereich der ersten Einbuchtung 340 des Rückenabschnitts 320 des die Spülwanne 300 bildenden Teils des Basisträgers 200 ist eine erste Haltevorrichtung 360 ausgebildet. Im Bereich der zweiten Einbuchtung 350 des Rückenabschnitts 320 der Spülwanne 300 ist eine zweite Haltevorrichtung 370 ausgebildet.

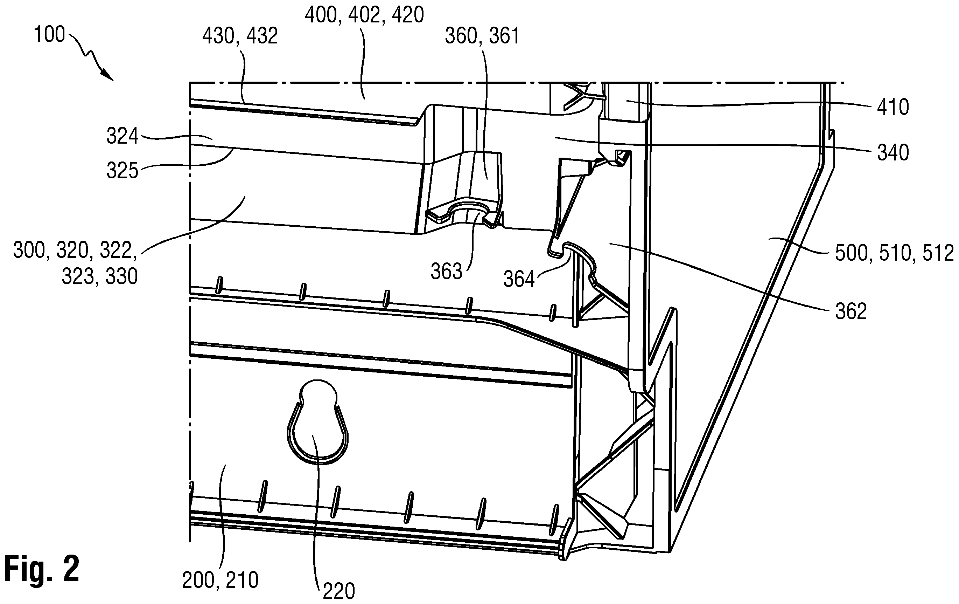

Figur 2 zeigt eine vergrößerte Darstellung eines Teils der in Figur 1 gezeigten rückwärtigen Ansicht der Geschirrspülmaschine 100. In Figur 2 ist insbesondere der Bereich der ersten Einbuchtung 340 im Rückenabschnitt 320 der Spülwanne 300 und die im Bereich der ersten Einbuchtung 340 angeordnete erste Haltevorrichtung 360 dargestellt.

Die erste Haltevorrichtung 360 umfasst eine erste Schlauchklammer 361 und eine zweite Schlauchklammer 362. Die erste Schlauchklammer 361 und die zweite Schlauchklammer 362 sind bevorzugt beide einstückig mit den übrigen Teilen der Spülwanne 300 und des restlichen Basisträgers 200 ausgebildet. Die erste Schlauchklammer 361 und die zweite Schlauchklammer 362 sind jeweils als im Wesentlichen in einer Ebene angeordnete flache Bauteile ausgebildet. Die erste Schlauchklammer 361 ist im Bereich des Absatzes 325 zwischen dem unteren Abschnitt 323 und dem oberen Abschnitt 324 des Rückenabschnitts 320 der Spülwanne 300 mit der Spülwanne 300 verbunden und verläuft abwärts geneigt nach außen. Die Ebene, in der die zweite Schlauchklammer 362 angeordnet ist, ist gegenüber der Ebene, in der die erste Schlauchklammer 361 angeordnet ist, um einen Winkel von etwa 45° gekippt. Die erste Schlauchklammer 361 ist näher am mittleren Bereich 330 des Rückenabschnitts 320 der Spülwanne 300 angeordnet. Die erste Schlauchklammer 361 ist am Übergangsbereich zwischen der ersten Einbuchtung 340 des Rückenabschnitts 320 und dem mittleren Bereich 330 des Rückenabschnitts 320 der Spülwanne 300 ausgebildet. Die zweite Schlauchklammer 362 ist näher an der ersten Seitenwand 510 der Geschirrspülmaschine 100 angeordnet. Die Verkippung der zweiten Schlauchklammer 362 gegenüber der ersten Schlauchklammer 361 ist dabei so orientiert, dass die der ersten Schlauchklammer 361 zugewandte Seite der zweiten Schlauchklammer 362 in senkrechte Richtung der Geschirrspülmaschine 100 höher liegt als die der ersten Seitenwand 510 der Geschirrspülmaschine 100 zugewandte Seite der zweiten Schlauchklammer 362.

Die erste Schlauchklammer 361 und die zweite Schlauchklammer 362 erstrecken sich jeweils aus dem inneren Bereich der ersten Einbuchtung 340 nach außen. Dabei erstrecken sich die erste Schlauchklammer 361 und die zweite Schlauchklammer 362 derart weit aus der ersten Einbuchtung 340 nach außen, dass die erste Schlauchklammer 361 und die zweite Schlauchklammer 362 in rückwärtige Richtung der Geschirrspülmaschine 100 sogar den mittleren Bereich 330 des Rückenabschnitts 320 der Spülwanne 300 überragen.

An ihrem äußeren Ende weist die erste Schlauchklammer 361 eine erste Klemmöffnung 363 auf. Die zweite Schlauchklammer 362 weist an ihrem äußeren Ende eine zweite Klemmöffnung 364 auf. Die Klemmöffnungen 363, 364 sind als Ausschnitte in den flach ausgebildeten Schlauchklammern 361, 362 mit im Wesentlichen kreissegmentförmiger Form ausgebildet. Die erste Klemmöffnung 363 und die zweite Klemmöffnung 364 sind dabei so geformt, dass ein Schlauch mit kreisförmigem Querschnitt in der ersten Klemmöffnung 363 und der zweiten Klemmöffnung 364 eingeklemmt werden kann.

Aus Figur 1 ist ersichtlich, dass die im Bereich der zweiten Einbuchtung 350 angeordnete zweite Haltevorrichtung 370 spiegelsymmetrisch zur ersten Haltevorrichtung 360 in der ersten Einbuchtung 340 ausgebildet ist. Somit umfasst die zweite Haltevorrichtung 370 eine erste Schlauchklammer 371 mit einer ersten Klemmöffnung 373 und eine zweite Schlauchklammer 372 mit einer zweiten Klemmöffnung 374. Die erste Schlauchklammer 371 ist im Übergangsbereich zwischen der zweiten Einbuchtung 350 und dem mittleren Bereich 330 des Rückenabschnitts 320 der Spülwanne 300 angeordnet und parallel zum Absatz 325 zwischen dem unteren Abschnitt 323 und dem oberen Abschnitt 324 des Rückenabschnitts 320 orientiert. Die zweite Schlauchklammer 372 ist der zweiten Seitenwand der Geschirrspülmaschine 100 benachbart und gegenüber der ersten Schlauchklammer 371 um einen Winkel von etwa 45° verkippt.

In einer vereinfachten Ausführungsform der Geschirrspülmaschine 100 kann entweder die erste Haltevorrichtung 360 oder die zweite Haltevorrichtung 370 entfallen. Auch die zugehörige Einbuchtung 340, 350 kann dann entfallen.

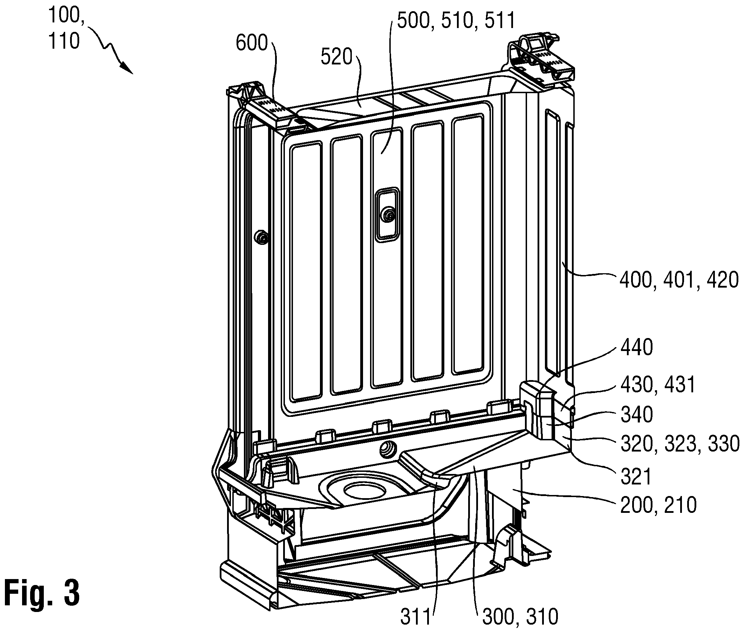

Figur 3 zeigt in einer geschnitten Darstellung eine Ansicht eines Teils eines Innenraums 110 der Geschirrspülmaschine 100. Der Schnitt verläuft dabei parallel zur ersten Seitenwand 510 der Geschirrspülmaschine 100.

In Figur 3 ist erkennbar, dass der die Spülwanne 300 bildende Teil des Basisträgers 200 einen Bodenbereich 310 des Innenraums 110 der Geschirrspülmaschine 100 bildet. Im Bodenbereich 310 der Spülwanne 300 sind mehrere als Absätze ausgebildete Versteifungen 311 ausgebildet. Die Versteifungen 311 dienen dazu, eine Verwindungssteifigkeit des Bodenbereichs 310 der Spülwanne 300 zu erhöhen. Die Versteifungen 311 können auch entfallen.

Aus Figur 3 ist ersichtlich, dass in einem vorderen Bereich der Geschirrspülmaschine 100 ein vorderer Rahmen 600 auf dem einen Sockel der Geschirrspülmaschine 100 bildenden Basisträger 200 aufgesetzt ist. Der vordere Rahmen 600 ist in Figur 3 lediglich teilweise dargestellt. Der vordere Rahmen 600 und der als Teil der Rückwand 400 ausgebildete hintere Rahmen 410 halten die u-förmige Behälterwandung 500, die die erste Seitenwand 510, eine Deckenwandung 520 und eine zweite Seitenwand umfasst. Von der ersten Seitenwand 510 ist in Figur 3 eine Innenseite 511 sichtbar. Von der Deckenwandung 520 der Behälterwandung 500 ist in Figur 3 lediglich ein Teil gezeigt. Die zweite Seitenwand der Behälterwandung 500 ist in Figur 3 nicht sichtbar.

In Figur 3 sind ferner eine dem Innenraum 110 der Geschirrspülmaschine 100 zugewandte Innenseite 321 des Rückenabschnitts 320 des die Spülwanne 300 bildenden Teils des Basisträgers 200 und eine dem Innenraum 110 der Geschirrspülmaschine 100 zugewandte Innenseite 401 der Rückwand 400 sichtbar.

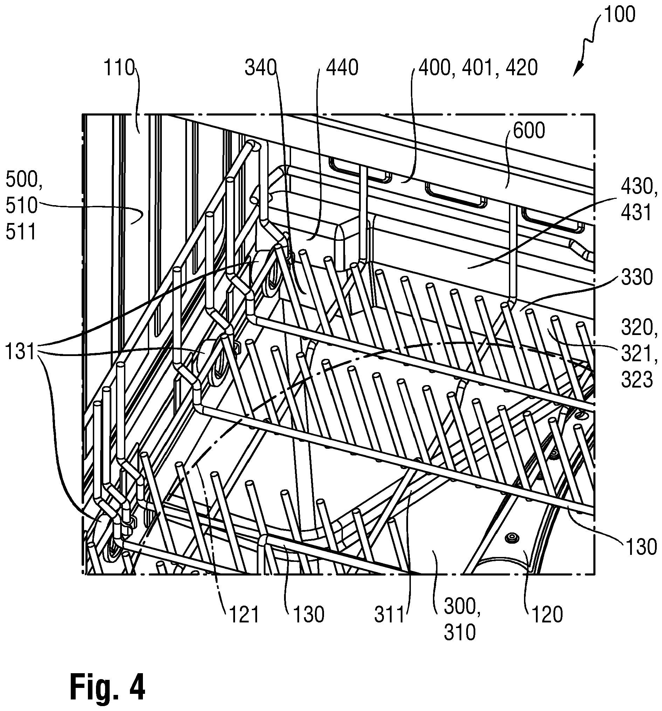

Figur 4 zeigt eine weitere Ansicht eines Teils des Innenraums 110 der Geschirrspülmaschine 100. In der Darstellung der Figur 4 ist der Innenraum 110 der Geschirrspülmaschine 100 mit einem Sprüharm 120 und einem Geschirrkorb 130 bestückt.

Der Sprüharm 120 ist im Zentrum des Bodenbereichs 310 der Spülwanne 300 angeordnet und dazu ausgebildet, sich während eines Betriebs der Geschirrspülmaschine 100 um eine senkrecht zum Bodenbereich 310 der Spülwanne 300 orientierte und im Zentrum des Bodenbereichs 310 der Spülwanne 300 angeordnete Drehachse zu drehen und dabei Spülflüssigkeit zu versprühen. Mit einer strichpunktierten Linie ist in Figur 4 ein Drehbereich 121 des Sprüharms 120 angedeutet.

Der Geschirrkorb 130 ist bevorzugt aus Draht ausgebildet und dient zur Aufnahme von Geschirr. Der Geschirrkorb 130 weist eine Mehrzahl von Laufrollen 131 auf, die dazu dienen, den Geschirrkorb 130 oberhalb des Bodenbereichs 310 der Spülwanne 300 zu verfahren.

In Figur 4 ist außerdem die erste Einbuchtung 340 im Rückenabschnitt 320 der Spülwanne 300 erkennbar. Die erste Einbuchtung 340 ragt weiter in den Innenraum 110 der Geschirrspülmaschine 100 als der mittlere Bereich 330 des Rückenabschnitts 320 der Spülwanne 300. Die erste Einbuchtung 340 ist allerdings derart in einem Eckbereich des Innenraums 110 angeordnet, dass die erste Einbuchtung 340 außerhalb des durch den Sprüharm 120 überstrichenen Drehbereichs 121 und auch außerhalb des Bereichs angeordnet ist, in dem sich der Geschirrskorb 130 und eventuell im Geschirrkorb 130 angeordnetes Geschirr befinden.

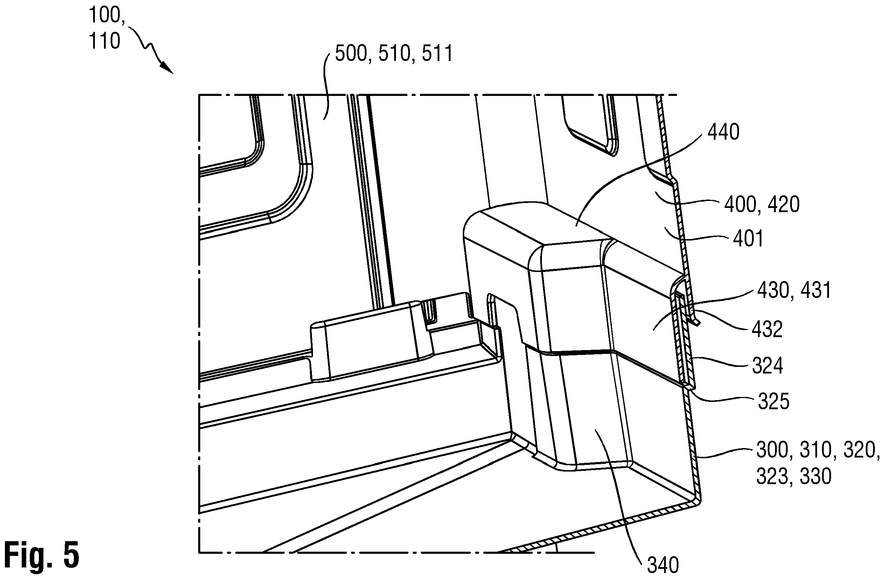

Figur 5 zeigt eine vergrößerte Ansicht des Teils des Innenraums 110 der Geschirrspülmaschine 100, in dem die erste Einbuchtung 340 im Rückenabschnitt 320 der Spülwanne 300 ausgebildet ist. In der Darstellung der Figur 5 ist die Geschirrspülmaschine 100 an einer zur ersten Seitenwand 510 parallelen Ebene geschnitten. Der Geschirrkorb 130 im Innenraum 110 der Geschirrspülmaschine 100 ist in Figur 5 nicht dargestellt.

In der Schnittdarstellung der Figur 5 lassen sich deutlich der untere Abschnitt 323 und der obere Abschnitt 324 des mittleren Bereichs 330 des Rückenabschnitts 320 der Spülwanne 300 unterscheiden. Der untere Abschnitt 323 und der obere Abschnitt 324 sind parallel zueinander orientiert. Jedoch ist der untere Abschnitt 323 gegenüber dem oberen Abschnitt 324 etwas in Richtung des Innenraums 110 versetzt. Zwischen dem unteren Abschnitt 323 und dem oberen Abschnitt 324 ist der Absatz 325 ausgebildet. Die Unterteilung des Rückenabschnitts 320 in den unteren Abschnitt 323 und den oberen Abschnitt 324 setzt sich auch im Bereich der ersten Einbuchtung 340 und im Bereich der zweiten Einbuchtung 350 fort. Auch im Bereich der Einbuchtungen 340, 350 ist der obere Abschnitt 324 gegenüber dem unteren Abschnitt 323 etwas nach außen versetzt. Zwischen dem oberen Abschnitt 324 und dem unteren Abschnitt 323 ist auch in den Bereichen der Einbuchtungen 340, 350 der Absatz 325 ausgebildet.

Aus Figur 5 ist außerdem ersichtlich, dass die Rückwand 400 einen oberen Bereich 420 aufweist, der im Wesentlichen eben ausgebildet ist. In senkrechte Richtung der Geschirrspülmaschine 100 unterhalb des oberen Bereichs 420 weist die Rückwand 400 einen mittleren Bereich 430, eine erste Kappe 440 und eine zweite Kappe auf. Die zweite Kappe ist in Figur 5 nicht sichtbar. Der mittlere Bereich 430 der Rückwand 400 ist in senkrechter Richtung der Geschirrspülmaschine 100 oberhalb des mittleren Bereichs 330 des Rückabschnitts 320 der Spülwanne 300 angeordnet. Die erste Kappe 440 ist in senkrechter Richtung der Geschirrspülmaschine 100 oberhalb der ersten Einbuchtung 340 der Spülwanne 300 angeordnet. Die zweite Kappe ist entsprechend oberhalb der zweiten Einbuchtung 350 der Spülwanne 300 angeordnet.

Der mittlere Bereich 430 der Rückwand 400 weist eine innere Schürze 431 und eine äußere Schürze 432 auf. Die äußere Schürze 432 setzt dabei im Wesentlichen den oberen Bereich 420 der Rückwand 400 fort. Die innere Schürze 431 überlappt den oberen Abschnitt 324 des mittleren Bereichs 330 des Rückenabschnitts 320 der Spülwanne 300. Die innere Schürze 431 ist somit im Innenraum 110 der Geschirrspülmaschine 100 angeordnet. Die innere Schürze 431 und die äußere Schürze 432 überlappen den oberen Abschnitt 324 des mittleren Bereichs 330 des Rückenabschnitts 320 der Spülwanne 300. Die äußere Schürze 432 überlappt den oberen Abschnitt 324 lediglich etwa zur Hälfte. Die innere Schürze 431 überlappt den oberen Abschnitt 324 vollständig und erstreckt sich bis zum Absatz 325 zwischen dem oberen Abschnitt 324 und dem unteren Abschnitt 323 des Rückenabschnitts 320 der Spülwanne 300. Die innere Schürze 431, der obere Abschnitt 324 des Rückenabschnitts 320 und die äußere Schürze 432 sind somit nach Art einer Feder-Nut-Verbindung angeordnet. Diese Verbindung dient zur Abdichtung des Innenraums 110 der Geschirrspülmaschine 100 nach außen.

Die erste Kappe 440 ist so ausgebildet, dass sie den oberen Abschnitt 324 der ersten Einbuchtung 340 im Rückenabschnitt 320 der Spülwanne 300 überdeckt. Somit schließt die erste Kappe 440 die erste Einbuchtung 340 dichtend zum Innenraum 110 der Geschirrspülmaschine 100 ab. Die erste Kappe 440 ragt dabei gegenüber dem oberen Bereich 420 der Rückwand 400 weiter in den Innenraum 110 hinein. Die zweite Kappe deckt entsprechend den oberen Abschnitt 324 der zweiten Einbuchtung 350 im Rückenabschnitt 320 der Spülwanne 300 ab.

Besteht die Rückwand 400 aus Kunststoff, so lassen sich die erste Kappe 440 und die zweite Kappe vorteilhafterweise besonders leicht ausbilden.

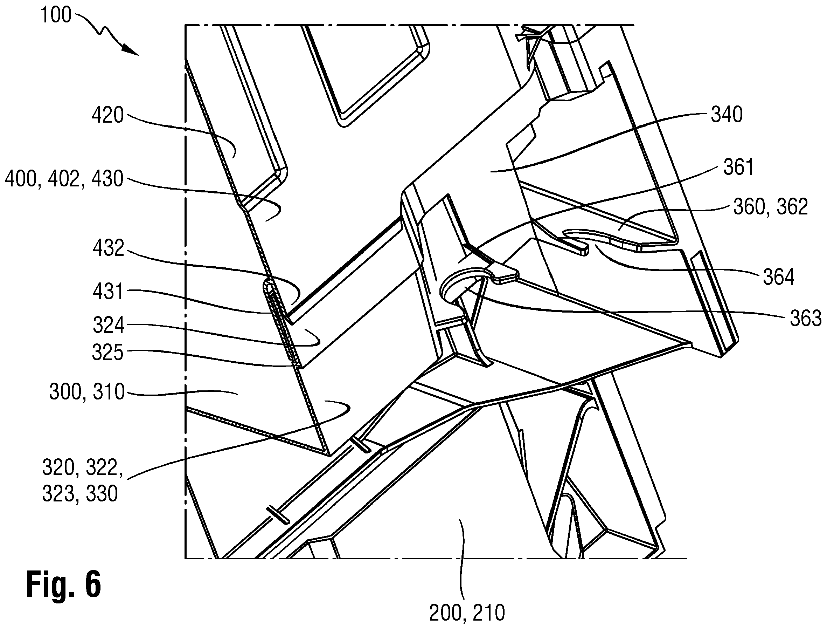

Figur 6 zeigt in einer geschnitten Darstellung eine Ansicht der rückseitigen Wand 210 des Basisträgers 200 und der Außenseite 402 der Rückwand 400 im Bereich um die erste Einbuchtung 340 im Rückenabschnitt 320 des die Spülwanne 300 bildenden Teils des Basisträgers 200. Der Schnitt ist auch in der Darstellung der Figur 6 parallel zur ersten Seitenwand 510 der Geschirrspülmaschine 100 orientiert.

Aus Figur 6 ist ersichtlich, dass die die erste Einbuchtung 340 auf der Innenseite 321 des Rückenabschnitts 320 der Spülwanne 300 überragende erste Kappe 440 der Rückwand 400 die erste Einbuchtung 340 auf der Außenseite 322 des Rückenabschnitts 320 der Spülwanne 300 nicht überragt. Somit ist die erste Einbuchtung 340 im rückwärtigen Bereich der Geschirrspülmaschine 100 nach außen zugänglich.

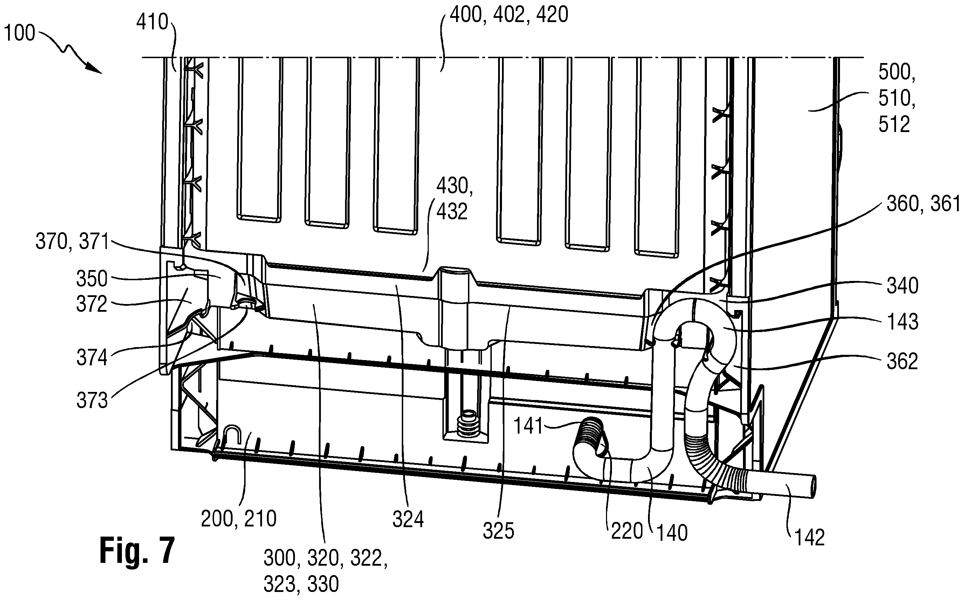

Figur 7 zeigt eine der Darstellungen der Figur 1 entsprechende Ansicht des rückwärtigen Teils der Geschirrspülmaschine 100. Figur 7 zeigt zusätzlich zu den in Figur 1 dargestellten Elementen der Geschirrspülmaschine 100 einen Ablaufschlauch 140. Der Ablaufschlauch 140 dient dazu, Spülflüssigkeit (Spülflotte) aus dem Innenraum 110 der Geschirrspülmaschine 100 zu einem Abwasseranschluss zu leiten. Der Abwasseranschluss kann beispielsweise ein Abwasseranschluss in einer Küche sein, in der Geschirrspülmaschine 100 aufgestellt ist.

Der Ablaufschlauch 140 ist im Inneren der Geschirrspülmaschine 100 an einer innerhalb des Basisträgers 200 angeordneten Entleerungspumpe angeschlossen. Ein durchgeführter Abschnitt 141 des Ablaufschlauchs 140 erstreckt sich aus dem Inneren des Basisträgers 200 durch den Durchbruch 220 in der rückseitigen Wand 210 des Basisträgers 200 in den außerhalb der Geschirrspülmaschine 100 angeordneten Außenbereich. Im Außenbereich verläuft ein freier Abschnitt 142 des Ablaufschlauchs 140 in Richtung des in Figur 7 nicht sichtbaren Abwasseranschlusses.

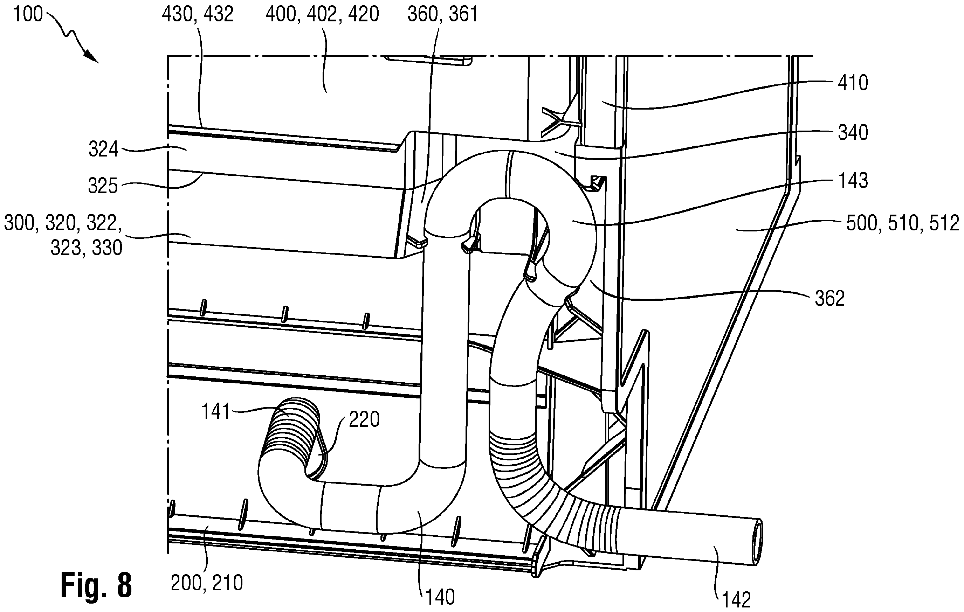

Zwischen dem durchgeführten Abschnitt 141 des Ablaufschlauchs 140 und dem freien Abschnitt 142 des Ablaufschlauchs 140 ist ein hochgeführter Abschnitt 143 des Ablaufschlauchs 140 angeordnet. Figur 8 zeigt eine vergrößerte Darstellung des hochgeführten Abschnitts 143 des Ablaufschlauchs 140. Der hochgeführte Abschnitt 143 bildet einen u-förmigen Teil des Ablaufschlauchs 140, wobei die U-Form auf dem Kopf steht. Der hochgeführte Abschnitt 143 ist in der ersten Haltevorrichtung 360 in der ersten Einbuchtung 340 des Rückenabschnitts 320 gehalten.

Ein sich vom durchgeführten Abschnitt 141 des Ablaufschlauchs 140 in senkrechte Richtung der Geschirrspülmaschine 100 nach oben erstreckender Teil des hochgeführten Abschnitts 143 des Ablaufschlauchs 140 ist in der ersten Klemmöffnung 363 der ersten Schlauchklammer 361 der ersten Haltevorrichtung 360 eingeklemmt. An den in der ersten Schlauchklammer 361 eingeklemmten Teil des Ablaufschlauchs 140 schließt sich ein u-förmig gekrümmter Abschnitt des Ablaufschlauchs 140 an, dem ein in senkrechte Richtung der Geschirrspülmaschine 100 nach unten verlaufender Teil des hochgeführten Abschnitts 143 des Ablaufschlauchs 140 nachfolgt. Der in senkrechte Richtung der Geschirrspülmaschine 100 nach unten verlaufende Teil des hochgeführten Abschnitts 143 ist in der zweiten Klemmöffnung 364 der zweiten Schlauchklammer 362 der ersten Haltevorrichtung 360 eingeklemmt. An den in senkrechte Richtung der Geschirrspülmaschine 100 nach unten verlaufende Teil des hochgeführten Abschnitts 143 des Ablaufschlauchs 140 schließt sich der freie Abschnitt 142 des Ablaufschlauchs 140 an.

Der hochgeführte Abschnitt 143 des Ablaufschlauchs 140 bildet eine Schlauchhochführung, durch die verhindert wird, dass im Innenraum 110 der Geschirrspülmaschine 100 befindliche Spülflüssigkeit unbeabsichtigt aus der Geschirrspülmaschine 100 abläuft. Der Scheitelpunkt des hochgeführten Abschnitts 143 des Ablaufschlauchs 140 liegt zu diesem Zwecke in senkrechte Richtung der Geschirrspülmaschine 100 höher als ein maximaler Flüssigkeitspegel einer Spülflüssigkeit im Innenraum 110 der Geschirrspülmaschine 100.

Da die Schlauchhochführung durch den hochgeführten Abschnitt 143 des Ablaufschlauchs 140 direkt in den Ablaufschlauch 140 integriert ist, werden vorteilhafterweise keine weiteren Bauteile benötigt, um ein versehentliches Ablaufen der Spülflüssigkeit aus dem Innenraum 110 der Geschirrspülmaschine 100 zu verhindern. Vorteilhafterweise sind dadurch auch keine weiteren Montageschritte bei der Montage der Geschirrspülmaschine 100 notwendig. Der Ablaufschlauch 140 kann direkt an einen Abgang einer Entleerungspumpe der Geschirrspülmaschine 100 angeschlossen werden. Es werden dadurch vorteilhafterweise auch keine zusätzlichen Dichtstellen benötigt.

Der durch die erste Haltevorrichtung 360 gehaltene hochgeführte Abschnitt 143 des Ablaufschlauchs 140 ist vorteilhafterweise in der ersten Einbuchtung 340 angeordnet und dadurch geschützt. Hierdurch wird vermieden, dass der hochgeführte Abschnitt 143 versehentlich aus der ersten Haltevorrichtung 360 gezogen wird. In einer vereinfachten Ausführungsform der Geschirrspülmaschine kann die erste Einbuchtung 340 jedoch auch entfallen. In dieser Ausführungsform ist die erste Haltevorrichtung 360 in einem Bereich der Rückwand der Geschirrspülmaschine 100 angeordnet, der nicht gegenüber übrigen Abschnitten der Rückwand der Geschirrspülmaschine 100 vertieft ist.

Vorteilhafterweise kann das Einklemmen des hochgeführten Abschnitts 143 des Ablaufschlauchs 140 in die erste Haltevorrichtung 360 durch einen Benutzer der Geschirrspülmaschine 100 erfolgen. Hierdurch reduzieren sich vorteilhafterweise die bei der Herstellung der Geschirrspülmaschine 100 anfallenden Montagekosten.

Falls in einem Haushalt, in dem die Geschirrspülmaschine 100 aufgestellt wird, ein Siphon an einem Abwasseranschluss hoch genug angeordnet ist, um ein versehentliches Auslaufen von Spülflüssigkeit aus dem Innenraum 110 der Geschirrspülmaschine 100 zu verhindern, so kann auf die durch den hochgeführten Abschnitt 143 des Ablaufschlauchs 140 gebildete Schlauchhochführung verzichtet werden. In diesem Fall kann der hochgeführte Abschnitt 143 des Ablaufschlauchs 140 aus der ersten Haltevorrichtung 360 entnommen werden, wodurch sich der zur Verbindung mit dem Abwasseranschluss nutzbare Teil des Ablaufschlauchs 140 verlängert. Hierdurch kann vorteilhafterweise bei gleicher Länge des Ablaufschlauchs 140 ein größerer Abstand zwischen der Geschirrspülmaschine 100 und dem Abwasseranschluss des Haushalts überbrückt werden.

Durch die einstückige Ausbildung der ersten Haltevorrichtung 360 mit der Spülwanne 300 und den übrigen Teilen des Basisträgers 200 sind zur Halterung des hochgeführten Abschnitts 143 des Ablaufschlauchs 140 vorteilhafterweise keine weiteren Zusatzteile erforderlich. Hierdurch reduzieren sich die Herstellungskosten der Geschirrspülmaschine 100.

Durch die Führung des hochgeführten Abschnitts 143 des Ablaufschlauchs 140 und die Befestigung des hochgeführten Abschnitts 143 des Ablaufschlauchs 140 in der ersten Haltevorrichtung 360 wird der Ablaufschlauch 140 in definierter Weise in Richtung der ersten Seitenwand 510 der Geschirrspülmaschine 100 geführt. Dadurch reduziert sich die Gefahr, das lose Abschnitte des Ablaufschlauchs 140 hinter der Geschirrspülmaschine 100 abknicken.

Die in Figuren 7 und 8 dargestellte Anordnung, in der der hochgeführte Abschnitt 143 des Ablaufschlauchs 140 in der ersten Haltevorrichtung 360 gehalten ist, eignet sich für Fälle, in denen die Geschirrspülmaschine 100 ist so aufgestellt ist, dass sich der Abwasseranschluss vom Durchbruch 220 in der rückseitigen Wand 210 des Basisträgers 200 aus betrachtet in der gleichen Richtung befindet, wie die erste Haltevorrichtung 360. Ist die Geschirrspülmaschine 100 jedoch so aufgestellt, dass der Abwasseranschluss vom Durchbruch 220 betrachtet in der umgekehrten Richtung, also in der gleichen Richtung wie die zweite Haltevorrichtung 370, angeordnet ist, so kann der hochgeführte Abschnitt 143 des Ablaufschlauchs 140 in der zweiten Haltevorrichtung 370 gehalten werden. In diesem Fall bleibt die erste Haltevorrichtung 360 frei. Vorteilhafterweise gestattet es diese Wechselmöglichkeit, bei gleicher Länge des Ablaufschlauchs 140 weiter entfernt liegende Abwasseranschlüsse zu erreichen. Dadurch, dass der Ablaufschlauch 140 von seinem durch den Durchbruch 220 verlaufenden durchgeführten Abschnitt 141 gleich in Richtung des Abwasseranschlusses geführt werden kann, reduziert sich außerdem die Gefahr, dass sich Abschnitte des Ablaufschlauchs 140 hinter der Geschirrspülmaschine 100 verheddern oder dort abknicken.

Gegenüber herkömmlichen Geschirrspülmaschinen kann bei der Geschirrspülmaschine 100 der bisher zur Realisierung einer Schlauchdurchführung genutzte Raum für andere Funktionen genutzt werden. Beispielsweise kann in dem bisher zur Schlauchhochführung innerhalb der Geschirrspülmaschine 100 genutzten Bereich eine zusätzliche Dämmung mit Vliesteilen erfolgen.

Anstelle des Ablaufschlauchs 140 könnte in den Haltevorrichtungen 360, 370 auch ein Zulaufschlauch der Geschirrspülmaschine 100 gehalten sein. Es könnte auch in einer Haltevorrichtung 360, 370 ein Zulaufschlauch und in der anderen Haltevorrichtung 360, 370 der Ablaufschlauch 140 gehalten sein.

Die vorstehend erläuterten und/oder in abhängigen Ansprüchen wiedergegebenen Ausund Weiterbildungen der Erfindung können, außer in Fällen eindeutiger Abhängigkeiten oder Unvereinbarkeiten, einzeln oder auch in beliebiger Kombination miteinander zur Anwendung kommen.

### Bezugszeichenliste

- 100: Geschirrspülmaschine
- 110: Innenraum
- 120: Sprüharm
- 121: Drehbereich des Sprüharms
- 130: Geschirrkorb
- 131: Laufrolle
- 140: Ablaufschlauch
- 141: durchgeführter Abschnitt
- 142: freier Abschnitt
- 143: hochgeführter Abschnitt

- 200: Basisträger
- 210: rückseitige Wand
- 220: Durchbruch

- 300: Spülwanne
- 310: Bodenbereich
- 311: Versteifung
- 320: Rückenabschnitt
- 321: Innenseite
- 322: Außenseite
- 323: unterer Abschnitt
- 324: oberer Abschnitt
- 325: Absatz (zw. unterem und oberem Abschnitt)
- 330: mittlerer Bereich
- 340: erste Einbuchtung
- 350: zweite Einbuchtung
- 360: erste Haltevorrichtung
- 361: erste Schlauchklammer
- 362: zweite Schlauchklammer
- 363: erste Klemmöffnung
- 364: zweite Klemmöffnung
- 370: zweite Haltevorrichtung
- 371: erste Schlauchklammer
- 372: zweite Schlauchklammer
- 373: erste Klemmöffnung
- 374: zweite Klemmöffnung

- 400: Rückwand
- 401: Innenseite
- 402: Außenseite
- 410: Rahmen
- 420: oberer Bereich
- 430: mittlerer Bereich
- 431: innere Schürze
- 432: äußere Schürze
- 440: erste Kappe

- 500: Behälterwandung
- 510: erste Seitenwand
- 511: Innenseite
- 512: Außenseite
- 520: Deckenwandung

- 600: vorderer Rahmen

## Patentansprüche

1. Wasserführendes Haushaltsgerät (100), insbesondere Haushalts-Geschirrspülmaschine,
mit einer an einer Außenwand (210) angeordneten ersten Haltevorrichtung (360), die dazu vorgesehen ist, während eines Betriebs des Haushaltsgeräts (100) einen Schlauch (140) an der Außenwand (210) zu halten, und einer zweiten Haltevorrichtung (370), die dazu vorgesehen ist, während eines Betriebs des Haushaltsgeräts (100) den Schlauch (140) an der Außenwand (210) zu halten, **dadurch gekennzeichnet, dass**
• die erste Haltevorrichtung (360) im Bereich einer ersten Einbuchtung (340) der Außenwand (210) angeordnet ist, wobei die Außenwand (210) im Bereich der ersten Einbuchtung (340) in Richtung eines Innenraums (110) des Haushaltsgeräts (100) eingebuchtet ist, und
• die zweite Haltevorrichtung (370) im Bereich einer zweiten Einbuchtung (350) der Außenwand (210) angeordnet ist, wobei die Außenwand (210) im Bereich der zweiten Einbuchtung (350) in Richtung eines Innenraums (110) des Haushaltsgeräts (100) eingebuchtet ist.

2. Haushaltsgerät (100) gemäß Anspruch 1,
wobei der Schlauch (140) durch einen Durchbruch (220) der Außenwand (210) des Haushaltsgeräts (100) geführt ist, wobei die erste Haltevorrichtung (360) oberhalb des Durchbruchs (220) angeordnet ist.

3. Haushaltsgerät (100) gemäß einem der vorhergehenden Ansprüche,
wobei der Schlauch (140) ein Ablaufschlauch ist.

4. Haushaltsgerät (100) gemäß einem der vorhergehenden Ansprüche,
wobei die Außenwand (210) eine rückwärtige Außenwand des Haushaltsgeräts (100) ist.

5. Haushaltsgerät (100) gemäß einem der vorhergehenden Ansprüche,
wobei die erste Haltevorrichtung (360) so ausgebildet und angeordnet ist, dass sie einen u-förmig verlaufenden Abschnitt (143) des Schlauchs (140) halten kann.

6. Haushaltsgerät (100) gemäß einem der vorhergehenden Ansprüche,
wobei die erste Haltevorrichtung (360) eine Schlauchklammer (361) zum Einklemmen des Schlauchs (140) umfasst.

7. Haushaltsgerät (100) gemäß Anspruch 6,
wobei die erste Haltevorrichtung (360) zwei Schlauchklammern (361, 362) umfasst.

8. Haushaltsgerät (100) gemäß einem der vorhergehenden Ansprüche,
wobei die erste Haltevorrichtung (360) einstückig mit einer Spülwanne (300) des Haushaltsgeräts (100) ausgebildet ist.

9. Haushaltsgerät (100) gemäß einem der vorhergehenden Ansprüche,
wobei die erste Haltevorrichtung (360) einstückig mit einem Basisträger (200) des Haushaltsgeräts (100) ausgebildet ist.

10. Haushaltsgerät (100) gemäß einem der vorhergehenden Ansprüche,wobei die zweite Haltevorrichtung (370) symmetrisch zur ersten Haltevorrichtung (360) ausgebildet und angeordnet ist.

## Claims

1. Water-conducting domestic appliance (100), in particular a domestic dishwasher, having a first retaining device (360), which is arranged on an outer wall (210) and is provided to hold a hose (140) against the outer wall (210) during operation of the domestic appliance (100), and a second retaining device (370), which is provided to hold the hose (140) against the outer wall (210) during operation of the domestic appliance (100), **characterised in that**
• the first retaining device (360) is arranged in the region of a first recess (340) of the outer wall (210), wherein the outer wall (210) is recessed in the direction of an internal chamber (110) of the domestic appliance (100) in the region of the first recess (340), and
• the second retaining device (370) is arranged in the region of a second recess (350) of the outer wall (210), wherein the outer wall (210) is recessed in the direction of an internal chamber (110) of the domestic appliance (100) in the region of the second recess (350).

2. Domestic appliance (100) according to claim 1,
wherein the hose (140) is guided through an aperture (220) in the outer wall (210) of the domestic appliance (100), wherein the first retaining device (360) is arranged above the aperture (220).

3. Domestic appliance (100) according to one of the preceding claims,
wherein the hose (140) is a drain hose.

4. Domestic appliance (100) according to one of the preceding claims,
wherein the outer wall (210) is a rear outer wall of the domestic appliance (100).

5. Domestic appliance (100) according to one of the preceding claims,
wherein the first retaining device (360) is configured and arranged in such a manner that it can hold a segment (143) of the hose (140) running in a U shape.

6. Domestic appliance (100) according to one of the preceding claims,
wherein the first retaining device (360) comprises a hose clip (361) for clamping the hose (140).

7. Domestic appliance (100) according to claim 6,
wherein the first retaining device (360) comprises two hose clips (361, 362).

8. Domestic appliance (100) according to one of the preceding claims,
wherein the first retaining device (360) is configured as a single piece with a base sump (300) of the domestic appliance (100).

9. Domestic appliance (100) according to one of the preceding claims,
wherein the first retaining device (360) is configured as a single piece with a base support (200) of the domestic appliance (100).

10. Domestic appliance according to one of the preceding claims,
wherein the second retaining device (370) is configured and arranged with symmetry in relation to the first retaining device (360).

## Revendications

1. Appareil ménager (100) à circulation d'eau, en particulier lave-vaisselle ménager, comprenant un premier dispositif de fixation (360) agencé sur une paroi extérieure (210) et prévu pour maintenir un tuyau (140) sur la paroi extérieure (210) pendant le fonctionnement de l'appareil ménager (100), et un second dispositif de fixation (370) prévu pour maintenir le tuyau (140) sur la paroi extérieure (210) pendant le fonctionnement de l'appareil ménager (100), **caractérisé en ce que**
• le premier dispositif de fixation (360) est agencé au niveau d'un premier creux (340) de la paroi extérieure (210), la paroi extérieure (210) étant creusée au niveau du premier creux (340) en direction d'un espace intérieur (110) de l'appareil ménager (100), et
• le second dispositif de fixation (370) est agencé au niveau d'un second creux (350) de la paroi extérieure (210), la paroi extérieure (210) étant creusée au niveau du second creux (350) en direction d'un espace intérieur (110) de l'appareil ménager (100).

2. Appareil ménager (100) selon la revendication 1,
le tuyau (140) étant guidé à travers une percée (220) de la paroi extérieure (210) de l'appareil ménager (100), le premier dispositif de fixation (360) étant agencé au-dessus de ladite percée (220).

3. Appareil ménager (100) selon l'une des revendications précédentes,
le tuyau (140) étant un tuyau d'évacuation.

4. Appareil ménager (100) selon l'une des revendications précédentes,
la paroi extérieure (210) étant une paroi extérieure arrière de l'appareil ménager (100).

5. Appareil ménager (100) selon l'une des revendications précédentes,
le premier dispositif de fixation (360) étant réalisé et agencé de façon à pouvoir maintenir une partie en U (143) du tuyau (140).

6. Appareil ménager (100) selon l'une des revendications précédentes,
le premier dispositif de fixation (360) comprenant une attache de tuyau (361) pour coincer le tuyau (140).

7. Appareil ménager (100) selon la revendication 6,
le premier dispositif de fixation (360) comprenant deux attaches de tuyau (361, 362).

8. Appareil ménager (100) selon l'une des revendications précédentes,
le premier dispositif de fixation (360) étant réalisé d'une seule pièce avec une cuve de lavage (300) de l'appareil ménager (100).

9. Appareil ménager (100) selon l'une des revendications précédentes,
le premier dispositif de fixation (360) étant réalisé d'une seule pièce avec un support de base (200) de l'appareil ménager (100).

10. Appareil ménager (100) selon l'une des revendications précédentes,
le second dispositif de fixation (370) étant réalisé et agencé symétriquement au premier dispositif de fixation (360).
